# EUROPÄISCHE PATENTSCHRIFT

(11) **EP 2 627 457 B1**
(45) Veröffentlichungstag und Bekanntmachung des Hinweises auf die Patenterteilung: **09.08.2017**
(21) Anmeldenummer: 10798467.6
(22) Anmeldetag: 24.10.2010
(51) Int. Cl.: B65G 47/72, B07B 4/06, B07B 13/00, B07B 13/08

(54) **VERFAHREN ZUM TRENNEN VON FLÄCHIGEN UND KÖRPERFÖRMIGEN FESTSTOFFEN IN EINEM SCHÜTTGUTSTROM**
METHOD FOR SEPARATING PLANAR AND THREE-DIMENSIONAL SOLIDS IN A FLOW OF BULK GOODS
PROCÉDÉ POUR SÉPARER DES MATIÈRES SOLIDES PLATES ET DES MATIÈRES SOLIDES EN VOLUME DANS UN FLUX DE MATIÈRES EN VRAC

(30) Priorität: 14.09.2010 DE 102010045309
(43) Veröffentlichungstag der Anmeldung: 21.08.2013
(73) Patentinhaber: Barnstedt, Dirk, 04571 Rötha (DE)
(72) Erfinder: Barnstedt, Dirk, 04571 Rötha (DE)
(74) Vertreter: Szaunig, Bernd
(86) Internationale Anmeldenummer: PCT/DE2010/001238
(87) Internationale Veröffentlichungsnummer: WO 2012/034547

(56) Entgegenhaltungen:
- EP-A2- 0 546 442
- WO-A1-2008/059209
- DE-A1- 10 205 064
- DE-A1- 19 546 830
- DE-U1- 9 417 627
- DE-U1-202009 011 601

## Beschreibung

Die vorliegende Erfindung befasst sich mit einer Vorrichtung und einem Verfahren zum Trennen von flächigen und körperförmigen Feststoffen in einem Schüttgutstrom mit leichten, mittlern und schweren Feststoffen, insbesondere mit einem Verfahren, das zur hochgradigen Trennung des Schüttgutes, in flächige und körperförmige Feststoffe führt.

Eine derartige Vorrichtung und ein solches Verfahren sind im Stand der Technik aus der EP0546442-A2 bekannt, die den Oberbegriff der Ansprüche 1 und 11 offenbart. Diese Vorrichtung und das Verfahren zum Trennen einer Materialmischung aus Materialien mit unterschiedlichen spezifischen Gewichten weisen eine Zuführeinrichtung zum Zuführen der Materialmischung auf, wobei am Ende der Zuführeinrichtung eine rotierende Trommel angeordnet ist, auf die die Materialmischung unterschiedlicher Dichte auftrifft und auf zwei Fördereinrichtungen getrennt wird. Zwischen der Fördereinrichtung und der rotierenden Trommel ist eine Luftblaseinrichtung angeordnet, die dazu dient, während des Herabfallens der Materialmischung die relativ leichten Fraktionen von den relativ schweren Fraktionen zu trennen. Diese Druckschrift offenbart ferner eine Anordnung mehrerer rotierender Trommeln deren Achsen auf einer nach unten weisenden Schrägen angeordnet sind. Zwischen den einzelnen Trommeln ist jeweils eine Blaseinrichtung angeordnet, sodass am Ende der Anordnung die leichten Fraktionen aus der Materialmischung vollständig heraus getrennt sein sollen.

Ferner ist auch eine derartige Vorrichtung im Stand der Technik aus der DE 20 2009 011 601 U1 bekannt. In dieser Druckschrift ist eine Vorrichtung zum Trennen von flächigen und körperförmigen Feststoffen und/oder leichten und schweren Feststoffen mit einer drehbaren Trommel, deren Manteloberfläche Durchbrüche aufweist, offenbart. Das Besondere an dieser Vorrichtung ist darin zu sehen, dass das innere Trommelvolumen in zwei Bereiche (D, E) mit vergleichbar großen Volumina aufgeteilt ist, wobei ein Volumenbereich (D) Unterdruck (pᵢ < pₐ) und der andere Volumenbereich (E) Überdruck oder Atmosphärendruck (pᵢ ≥ pₐ) aufweist, wobei pᵢ der Druck innerhalb der Bereiche D und E und pₐ der Atmosphärendruck ist.

Eine weitere ähnliche Erfindung ist aus der DE9306556-U1 bekannt geworden, deren inneres Volumen in 4 Sektoren aufgeteilt ist, wobei in einem Sektor Unterdruck und in einem gegenüber liegenden Sektor Überdruck herrscht, durch den hängen gebliebene Teile abgeblasen werden.

Weiterhin ist der Druckschrift DE 37 26 808 A1 ein Verfahren mit einer Siebtrommel zu entnehmen, in die ein Saugrohr geführt wird, so das praktisch im gesamten Innenvolumen der Trommel ein Unterdruck erzeugt wird, infolge dessen flächige Teile auf der Oberfläche der Siebtrommel hängen bleiben. Diese Teile werden dann im unteren Bereich der Siebtrommel durch zwei Abstreifvorrichtungen von der Oberfläche der Siebtrommel abgestreift. Das Abstreifen der einzelnen Teile wird noch von einer weiteren Abdeckung unterstützt, die im Innern der Trommel eng an der Trommelwand angeordnet ist und endseitig mit jeweils einer Dichtkante versehen ist, so dass sich der Unterdruck im Innern der Siebtrommel über die Fläche der Abdeckung nicht auswirken kann, wodurch die Haftwirkung der einzelnen Teile verringert werden soll.

Ferner ist aus der DE9204985-U1 eine Vorrichtung zum Sortieren der wiederverwendbaren Wertstoffe von Kunststoff- und Verbundabfällen im dualen Entsorgungssystem zu entnehmen. Die Vorrichtung enthält eine Sortiertrommel, die an der Mantelfläche Durchbrüche aufweist und die Mantelfläche axial leicht geneigt angeordnet ist. Die Sortiertrommel ist ferner drehbar gelagert und wird von außen von Luftansaugdüsen flankiert, wodurch das in der Trommel befindliche Sortiergut teilweise an der inneren Trommelwand zum Haften gebracht wird und solange an der inneren Trommelwand haftet, bis das Sortiergut an einem Scheitelpunkt angekommen ist und dann in der Sortiertrommel auf ein Längsförderband herabfällt, wodurch eine Trennung zwischen flächigen und körperförmigen Abfallteilen bewirkt wird. Die auf die Förderfläche des Förderbandes herabgefallenen Gegenstände werden anschließend noch einmal durch unterschiedlich stark blasende Düsen in verschiedene Abfallteile aus dem ankommenden Förderstrom ausgesondert.

Eine weitere Trennvorrichtung zur Trennung von Materialien unterschiedlicher Größe ist aus der DE 43 35 401 C2 bekannt geworden. Diese Trennvorrichtung weist eine rotierende Trommel auf, deren Trommelwände mit Öffnungen ausgestattet sind, durch die aufgrund ihrer Größe Materialien hindurchtreten können, die anschließend durch Steuerorgane mit Sensoren die unterschiedlichen Materialien erkennen und die auf der Außenseite der Trommel befindlichen Luftdüsen oder Stößel gezielt zur Entfernung der Materialien veranlassen. Die aus dem Stand der Technik bekannt gewordenen Vorrichtungen und Verfahren sind im Allgemeinen sowohl in der Herstellung als auch im Betrieb verhältnismäßig kostenintensiv und haben Probleme mit dem geforderten Trenngrad. Weiterhin sind Sortieranlagen im Recyclingbereich zum Trennen von wieder verwertbaren Rohstoffen aus Inputmaterialien bekannt, welche in den Materialkreislauf wieder einfließen. Bekannte Vorrichtungen zum Trennen der oben genannten Feststoffe in Aufbereitungsanlagen sind sogenannte NIR-Geräte, Sichter, Schrägsortierer, Ballistikseparatoren sowie manuelle Sortierungen.

Allen bisher bekannt gewordenen und eingesetzten Systemen und Verfahren haftet mehr oder weniger der Makel an, dass der Trennungsgrad des Schüttgutes nicht ganz den Anforderungen der Müllverbrennungsanlagen und Wertstoffverwertern entspricht, weil häufig großflächige Feststoffe schwer trennbar sind. Ferner sind die bekannten Anlagen in der Anschaffung sehr kostenintensiv und haben Probleme sowohl mit dem notwendigen Trennungsgrad des Massenflusses, als auch mit der Betriebssicherheit. Auch ist es in den meisten Fällen nicht möglich, Umrüstungen vorzunehmen, die sich nahtlos in das bestehende System einordnen.

Daher ist es Aufgabe der vorliegenden Erfindung, ein Verfahren und eine nach diesem Verfahren aufgebaute Vorrichtung bereitzustellen, die in der Lage sind, die Schwierigkeiten des Stands der Technik zu überwinden und eine Verbesserung des Trennungsgrades des Materialstroms, sowie eine höhere Effizienz der Vorrichtung zu gewährleisten.

Diese Aufgabe wird mit den kennzeichnenden Merkmalen der Hauptansprüche gelöst. Erfindungsgemäß ist die Vorrichtung, geeignet zum Trennen von flächigen und körperförmigen Feststoffen, sowie leichten, mittleren und schweren Feststoffen in einem Schüttgut, bestehend aus mindestens zwei Trennflächen die als Trommeln mit Durchbrüchen in den Mantelflächen ausgebildet sind, die in einem vorbestimmten horizontalen und vertikalen Abstand zueinander angeordnet, so dass die körperförmigen Bestandteile des Schüttgutes die Tennflächen zeitlich nacheinander berühren, dadurch gekennzeichnet, dass die mindestens zwei drehbar gelagerten Trommel-Trennflächen an mindestens einer Stirnfläche geschlossen sind und an der mindestens einen Stirnfläche mindestens eine Abluft- und/oder Zuluftöffnung angeordnet ist und dass mindestens eine Trennwand das Innenvolumen jeder Trommel in die Teilvolumina D, E unterteilt, wobei die Teilvolumina D und E der Trommel durch die Bleche variiert sind, wobei die mindestens eine Trennwand mindestens ein langgestrecktes Blech aufweist, das verschieblich quer zur Trennwand angeordnet ist.

Ein Grundgedanke der vorliegenden Erfindung ist in dem Verfahren zum Trennen von flächigen und körperförmigen Feststoffen eines Schüttgutes darin zu sehen, dass mindestens zwei Trennflächen in einem vorbestimmten Abstand (a, b) horizontal und vertikal zueinander angeordnet werden, denen zeitlich hintereinander das zu trennende Schüttgut zugeführt wird. Erfindungsgemäß sind die mindestens zwei Trennflächen trommelförmig ausgebildet, wobei das Trommelvolumen in mindestens zwei Bereiche (D, E) aufgeteilt ist. Vorteilhaft ist es, wenn ein Volumenbereich (D) Unterdruck (pᵢ < pₐ) und der andere Volumenbereich (E) Überdruck oder Atmosphärendruck (pᵢ ≥ pₐ) aufweist, wobei pᵢ der Druck innerhalb der Bereiche D und E und pₐ der Atmosphärendruck ist.

Ein weiterer Grundgedanke liegt darin, eine Vorrichtung zum Trennen von flächigen und körperförmigen Feststoffen und/oder leichten und schweren Feststoffen mit einer drehbaren Trommel, deren Manteloberfläche Durchbrüche aufweisen und dadurch gekennzeichnet ist, dass das im Innern des Trommelvolumens ein Unterdruck (pᵢ < pₐ) herrscht, wodurch zumindest teilweise flächige Feststoffe an der Oberfläche des Trenntrommelmantels aufgrund der Saugwirkung mittels der Durchbrüche im Trommelmantel aufgebaut wird und die haftenden Feststoffe mechanisch und/oder pneumatisch abgetrennt werden, wobei pᵢ der Druck innerhalb der Trenntrommel ist und pₐ der Atmosphärendruck ist.

Die erfindungsgemäße Vorrichtung zum Abscheiden von Feststoffen aus einem Massenstrom von verschiedenen Eigenschaften ist als kompakte Baueinheit zwischen Zuführung und Fortführung des Sortierguts platzierbar (Bandübergabe, Auswurf, Siebtrommel, Auswurf, Vibrorinnen, Auswurf, Ballistikseparatoren usw.).

Vorteilhaft bei der vorliegenden Erfindung ist es, dass die Durchbrüche (A, A', A") in der Mantelfläche der Trommel beliebig wählbare Formen annehmen können.

Ein weiterer Vorteil besteht darin, dass die Formen der Durchbrüche rundförmig, ovalförmig, sternförmig, kreuzförmig, länglich, quadratisch, rechteckig, dreieckig oder eine Mischung aus allen genannten Formen aufweisen.

Ein weiterer Vorteil besteht darin, dass der Querschnitt quer zur Längsachse der Trommel rundlich, polygonförmig, vorzugsweise rund ist. Erfindungsgemäß sind die Trommeln drehbar gelagert, wobei die Lagerung vorteilhaft ringförmig im Bereich der Peripherie des Trommelumfangs angeordnet ist. Erfindungsgemäß wird die Aufteilung des Innenraums der Trommel durch mindestens eine Trennwand gebildet. In einer vorteilhaften Weiterbildung weist die mindestens eine Trennwand an den Randbereichen zum Trommelmantel Dichtungen auf, welche die beiden Druckbereiche (Überdruck-, Unterdruckbereich) voneinander trennt. Erfindungsgemäß ist es auch, dass mindestens eine Stirnfläche der Trommel geschlossen ist und mindestens eine Stirnfläche mindestens eine Abluft- und/oder Zuluftöffnung aufweist.

Vorteilhaft ist es auch, dass die mindestens eine Trennwand an mindestens einer Zugstange, die sich innerhalb der Trenntrommel über die gesamte Länge der Trommel erstreckt, befestigt ist.

Ein weiterer Vorteil besteht darin, dass mindestens eine Stirnfläche der Trommel feststeht und nicht rotiert, wobei die Stirnflächen am Umfang Lagerungen aufweisen, die den Trommelmantel drehbar lagern.

Vorteilhaft ist es ferner, dass unterhalb der Trommel mindestens zwei Auffangvorrichtungen angeordnet sind, die das getrennte Fördergut aufnehmen. Erfindungsgemäß ist es auch, dass die Drehgeschwindigkeit des Trommelmantels variabel wählbar ist, wodurch ein weiteres Sortieren des Materialstroms bewirkt wird.

Vorteilhaft ist es ferner, das am Mantel der Trommel an geeigneter Stelle ein Zahnkranz zum Antrieb der Trommel angeordnet ist.

Vorteilhaft ist es auch, dass der Abluftstutzen mit dem Abluftkanal des Gebläses verbunden ist und der Zuluftstutzen mit der Druckleitung des Gebläses verbunden ist.

Vorteilhaft ist es weiterhin, dass die Drücke in den Teilbereichen (D, E) variable einstellbar sind.

Vorteilhaft ist es ferner, dass die Trennwände innerhalb der Trommeln an ihren den Stirnseiten am nächsten liegenden Seiten mindestens ein Gewindeelement aufweisen, das mit mindestens einer Stirnseite der Trommel in Verbindung steht.

Ein weiterer Vorteil wird darin gesehen, dass an mindestens einer Stirnseite der Trommel ein Sichtfenster angeordnet ist.

Vorteilhaft ist es auch, dass die beiden Trennflächen (Trommeln) übereinander angeordnet sind und hinter den Trennflächen ein Leitelement angeordnet ist. Erfindungsgemäß ist mindestens ein langgestrecktes Blech aus beliebigem Material, z.B. Stahl oder Kunststoff, verschieblich quer zur Trennwand anzuordnen, um die Teilvolumina innerhalb der Trommeln variieren zu können.

Ein weiterer Vorteil besteht darin, dass der Abstand zwischen dem Trommelmantel und der Fördereinrichtung variable einstellbar ist.

Weitere vorteilhafte Merkmale sind den Unteransprüchen und der Detailbeschreibung zu entnehmen.

Im nun Folgenden wird die Erfindung anhand von Zeichnungen im Einzelnen näher erläutert. Es zeigt
- Fig. 1:: eine schematische perspektivische Darstellung der Vorrichtung (1) mit drei Förderbändern (4, 4', 5) und zwei hintereinander angeordneten Trennflächen (2, 2'), die als Trommeln ausgebildet sind;
- Fig.2: eine schematische Draufsicht der Vorrichtung (1);
- Fig. 3: eine schematische Seitenansicht der Vorrichtung (1);
- Fig.4: eine schematische Draufsicht auf eine Stirnseite (9) der zwei hintereinander geschalteten Trennflächen (2, 2') mit einem Zuluft- und Abluftstutzen (7, 8);
- Fig.5: eine schematische Draufsicht auf die Stirnseite (13) mit den Antriebsaggregaten (10, 10') der Trennflächen (2, 2');

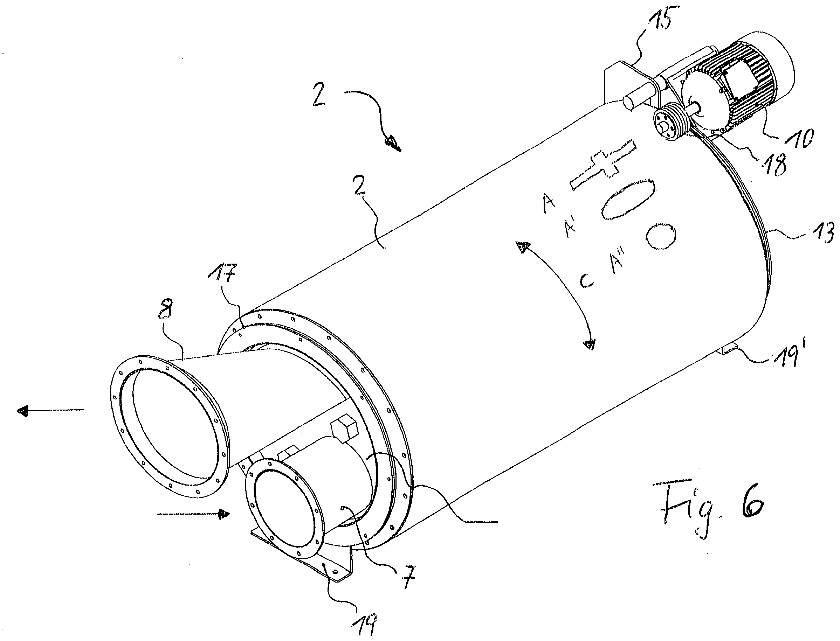

- Fig. 6: eine schematische perspektivische Darstellung einer Trommel (2);
- Fig. 7: eine schematische Schnittdarstellung quer zur Längsachse (12) der Trommel (2);
- Fig. 8: eine schematische Seitenansicht zweier Trennflächen (2, 2'), die übereinander angeordnet sind und seitlich mindestens ein Umlenkelement (...) angeordnet ist;
- Fig. 9: eine isometrische perspektivische Darstellung zweier Trennflächen (2, 2'), die an einer Verschiebekonstruktion befestigt sind;
- Fig.10: eine Seitenansicht auf zwei Trennflächen (2, 2'), die an zwei Flanschen mit einer Verschiebekonstruktion befestigt sind;
- Fig. 11: zeigt eine schematische Seitenansicht auf die Trennfläche (2) einer Trommel, die an der Verschiebungskonstruktion (32) befestigt ist.

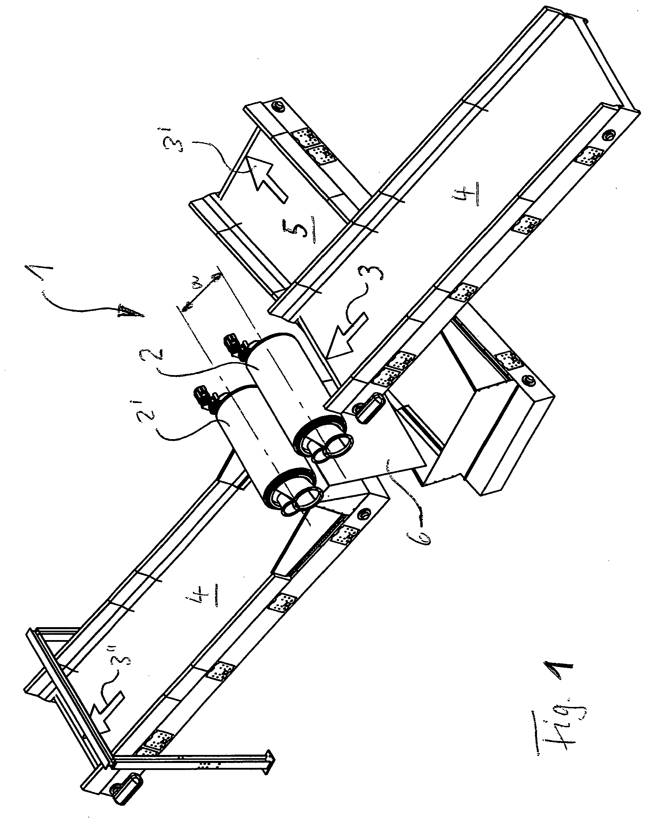

Die Fig. 1 zeigt eine schematische perspektivische Darstellung der Vorrichtung 1 mit drei Förderbändern 4, 4', 5 und zwei hintereinander angeordneten Trennflächen 2, 2', die als Trommeln ausgebildet sind. Die als Trommeln ausgebildeten Trennflächen 2, 2' sind zwischen den beiden Förderbänden 4, 4' angeordnet. Quer zur Mittellinie der Förderbänder 4, 4' ist unterhalb der Trennflächen 2, 2' ein weiteres Förderband 5 angeordnet, das eine abgetrennte Teilmenge der Feststoffe aus dem Schüttgut 3 aufnimmt und es einer hier nicht gezeigten Lagerstätte zuführt. Das gesamte Schüttgut 3 wird zunächst der ersten Trennfläche 2 zugeführt, die eine erste Trennung des Schüttgutes 3 vornimmt, bei der die größeren und schwereren Feststoffe der Masse einerseits durch die Schwerkraft und andererseits infolge der Wirkungsweise der ersten Trommel 2 aussortiert. Diese schwerere Teilmenge fällt auf das Förderband 5. Die leichtere Teilmenge des Schüttgutes 3 wird von der 2. Trennfläche 2' erfasst und nochmals dem Sortiervorgang unterzogen. Unterhalb der zweiten Trennfläche 2' ist ein Umlenkblech 6 angeordnet, das die herab fallenden Bestandteile des Schüttgutes 3' auf das Förderband 5 lenkt. Nach dem ersten Trennvorgang an der ersten Trennfläche 2 ist der Trennungsgrad des Schüttguts 3 jedoch häufig nicht vollständig, so dass ein weiterer Trennvorgang nachgeschaltet werden muss, um den Trennungsgrad zu erhöhen, d. h. dass die infolge des Überdruckes in der ersten Trommel 2 abgeblasenen Teilmengen die zweite Trennfläche 2' erreiche und dort nachsortiert wird. Dieser zweite Trennvorgang wird mit der zweiten Trennfläche 2' bewirkt, indem diese die verhältnismäßig großflächigen Teilmengen, die noch übrig geblieben sind, aufnimmt und in der selben Art und Weise wie im ersten Trennvorgang behandelt, so dass die schwereren Teilmengen gar nicht erst von der zweiten Trommel 2' angenommen werden und unmittelbar über die Rutsche 6 auf das Förderband 5 fallen. Die zweite Trennfläche 2' trennt somit im Wesentlichen noch einmal die großflächigen leichteren Teilmengen von den übrig gebliebenen schwereren Teilmengen, die auch dem Förderband 5 zugeführt werden. Im Ergebnis wird durch die mindestens zwei zeitlich hintereinander hinter einander liegenden Trennvorgänge ein befriedigender Trennungsgrad erreicht, der den Anforderungen der Abfallwirtschaft genügt. Das Förderand 4' kann auch durch eine anderen Fördereinrichtung, z.B. mittels eines Luftstromes, ausgeführt werden.

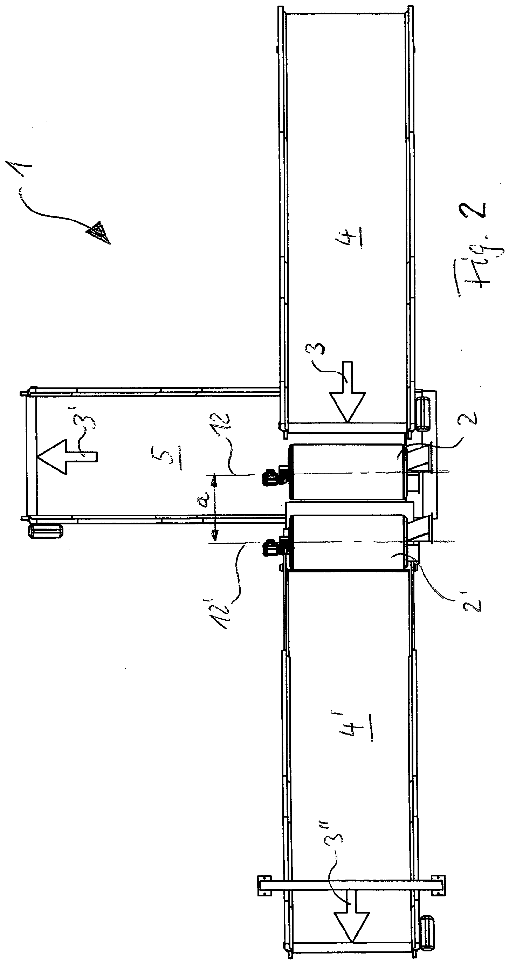

Die Fig. 2 zeigt eine schematische Draufsicht auf die Vorrichtung 1. Hierin ist ersichtlich, dass die Mittellinien der beiden Trenntrommeln 2, 2' mit einem vorbestimmten Abstand (a) in horizontaler Richtung beabstandet sind. Dieser Abstand ist variable und richtet sich im Wesentlichen nach der Art des zu trennenden Schüttgutes 3.

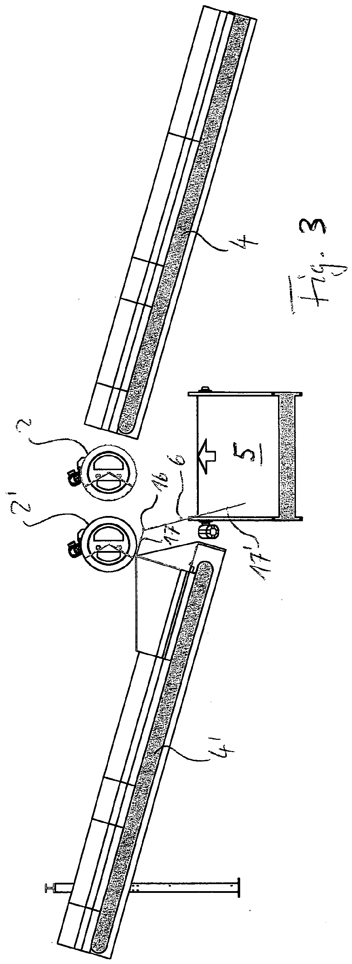

Die Fig. 3 zeigt eine schematische Seitenansicht der Vorrichtung 1. In dieser Darstellung ist die Anordnung des Umlenkbleches 6 oder Rutsche deutlich erkennbar. Das Umlenkblech 6 weist knapp unterhalb der Trenntrommel 2' eine Kante 16 auf, die das Umlenkblech in zwei Abschnitte 17, 17' unterteilt, wobei der Abschnitt 17 dicht unterhalb der Oberfläche der Trenntrommel 2' in einem vorbestimmte Winkel zur Oberfläche angeordnet ist. Der untere Abschnitt 17' führt das abgetrennte Material auf die Fördereinrichtung 5.

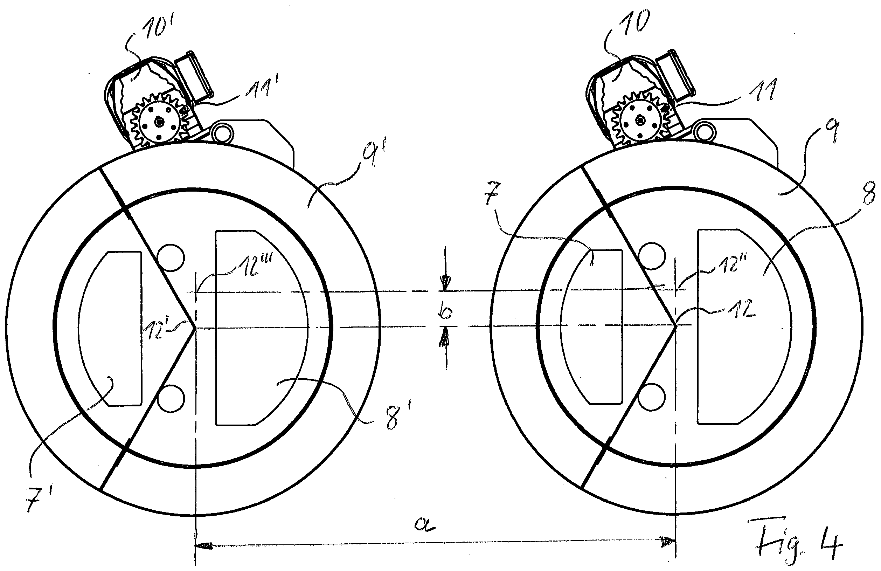

Die Fig. 4 zeigt eine schematische Darstellung der Stirnflächen 9, 9' der beiden Trenntrommeln 2, 2' an denen die Zuluftstutzen 7, 7' bzw. Absaugstutzen 8, 8' angeordnet sind. Im hier vorliegenden Ausführungsbeispiel ist der Zuluftstutzen 7, 7' im Durchmesser kleiner als der Abluft-Stutzen 8, an der Stirnseite 9, 9'. Die Fläche der Stirnseite 9, 9' muss so gewählt werden, dass die Zu- und Abluftleistungen für die einzelnen Teilbereiche innerhalb der Trenntrommel 1 gewährleistet sind. Dabei ist der Zuluftstutzen 7, 7' im vorliegenden Ausführungsbeispiel kleiner zu wählen als der Abluft-Stutzen 8, 8', da das Unterdruckvolumen im Allgemeinen größer auszulegen ist als das Überdruckvolumen. Die Stirnseite 9, 9' ist mit einer hier nicht gezeigten Montagekonsole fest verbunden, so dass die Trenntrommel 2, 2' in beliebige Positionen montiert werden kann. Die Antriebseinheit 10 versetzt die Trenntrommel 2, 2' mittels eines Zahnrads 11, 11', das im Eingriff mit einem geschlossenen Zahnkranz 14, 14' steht, in Rotation. In horizontaler Richtung können die Abstände (a) der Mittelachsen 12, 12' variable eingestellt werden. Das gleiche gilt für die vertikalen Abstände (b) der Mittellinien 12", 12"', was letztlich eine Funktion der Art des Schüttgutes ist.

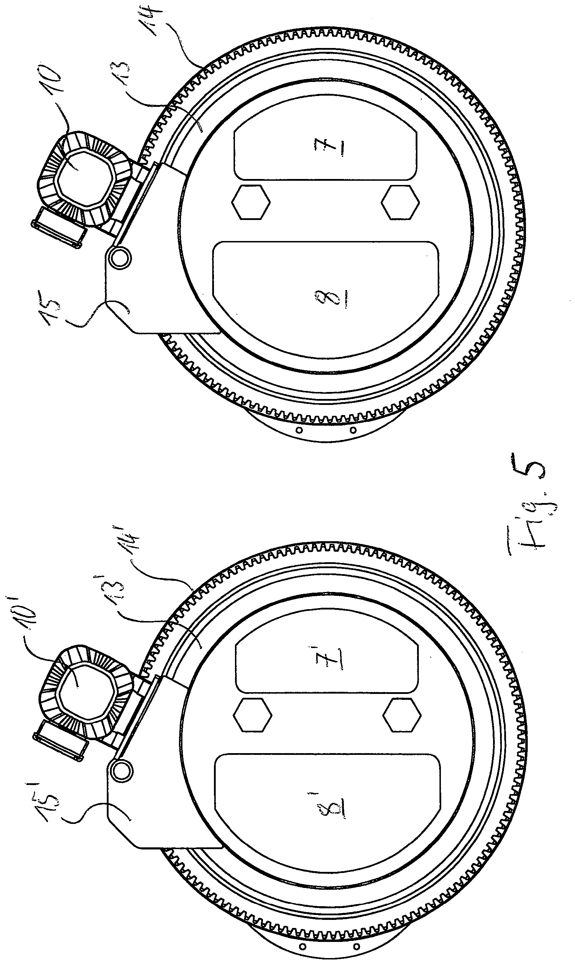

Die Fig. 5 zeigt eine schematische Darstellung der Stirnflächen 13, 13' der beiden Trenntrommeln 2, 2' an denen die Antriebsaggregate 10, 10', sowie jeweils ein zugehöriger geschlossener Zahnkranz 14, 14' angeordnet ist, der mit der Trommel fest verbunden ist. Der Antrieb 10, 10' ist ein Motor, der an einer Konsole 15, 15' befestigt ist.

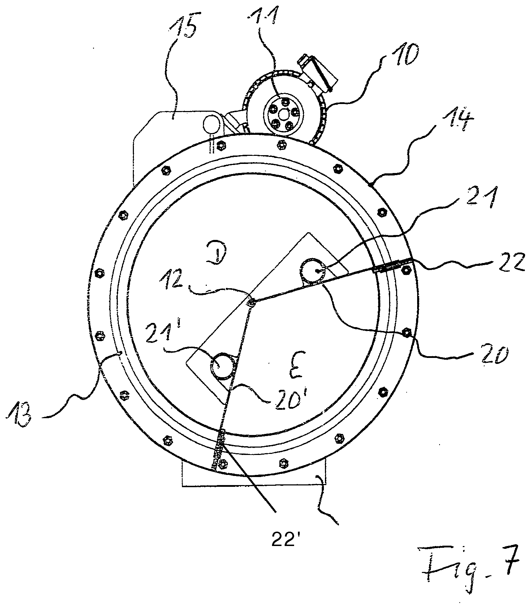

Die Fig. 7 zeigt ein Ausführungsbeispiel der beiden Trenntrommeln 2, 2' mit Ansicht auf die Anschluss-Stutzen für die Abluft 8 und die Zuluft 7. Die Trenntrommel 2 wird aus einem Trommelmantel und zwei Stirnflächen 9, 13 gebildet, wobei der Mantel der Trenntrommel 2 in der Form unterschiedliche Durchbrüche A, A', A" aufweist. Der Trommelmantel wird im Bereich der Stirnflächen 9, 13 durch zwei Lagerungen 17, 17' getragen, die ringförmig ausgebildet sein kann. Die Trenntrommel 2 sitzt demgemäß auf zwei Lagern, welche im Durchmesser so ausgestaltet sind, dass an den Stirnseiten 9, 13 des Trommelmantels genug Fläche vorhanden ist, um die Abluft bzw. Zuluft mittels feststehender Zu- und Abluft-Stutzen 7, 8 in die Trommel zu leiten bzw. aus der Trommel herauszuführen. Die Zu- und Abluftstutzen sind mit dem hier nicht gezeigten Gebläse verbunden, wobei der Zuluftstutzen 7 mit der Druckleitung des Gebläses und der Abluftstutzen mit der Unterdruckleitung des Gebläses verbunden ist. Durch die nicht rotierenden Stirnflächen 9, 9' können die Bereiche in der Trommel 2 in einen Unterdruckbereich D (pᵢ < pₐ) und einen Überdruck- bzw. Atmosphärendruck E (pᵢ ≥ pₐ) aufgeteilt werden. Mit dem Stutzen 8 wird Luft aus dem Unterdruckbereich D abgesaugt und durch den Stutzen 7 wird Luft in die Trommel 2 des Überdruckbereichs E eingeblasen. Die Trenntrommel 2 wird mittels zweier Montagekonsolen 18, 18' am Ende eines hier nicht gezeigten Förderbandes fest oder verstellbar montiert. Ferner wird die Trommel 2 mittels eines Antriebs 10 über eine Antriebsrolle 18 in Rotation versetzt. Der Antrieb 10 wird über eine Konsole 15 an der nicht rotierenden Stirnseite 13 befestigt. Die Antriebsrolle 18 liegt bei diesem Ausführungsbeispiel auf der äußeren Seite des Trommelmantels der anzutreibenden Trenntrommel 2, wodurch sie in Rotation in zwei Richtungen C versetzt werden kann. Die komplette Einheit wird mit den Montagekonsolen 19, 19' am Einsatzort platziert. Je nach Einsatzfall und Verwendungszweck kann die Trommel auch mit anderen, hier nicht gezeigten Antriebsmitteln, z.B. Riemen- Ketten-Zahntriebe angetrieben werden.

Die Fig. 7 zeigt eine Schnittdarstellung quer zur Trommelachse 12. Das Trommelvolumen ist im vorliegenden Ausführungsbeispiel in zwei Teilbereiche D, E aufgeteilt, wobei der Teilbereich D der Unterdruckbereich ist, in dem der innere Druck pᵢ kleiner ist als der äußere Luftdruck pₐ und im anderen Teilbereich E der Druck pi größer oder gleich dem Atmosphärendruck pₐ ist. Die Trennwand besteht im vorliegenden Ausführungsbeispiel aus zwei Teiltrennwänden 20, 20', die an Zugstangen 21, 21' befestigt sind. Die Zugstangen 21, 21' erstrecken sich über die gesamte Länge der Trenntrommel 1 und sind an den Stirnflächen 9, 9' der Trommel 2 befestigt. Die Trennwände 20, 20' weisen an ihren Enden im Bereich der inneren Trommelwand Dichtungen 22, 22' auf, die den Unterdruck- bzw. den Überdruckbereich innerhalb der Trommel voneinander trennen. Die Lagerungen 17 haben einen den geometrischen Verhältnissen angepassten Durchmesser.

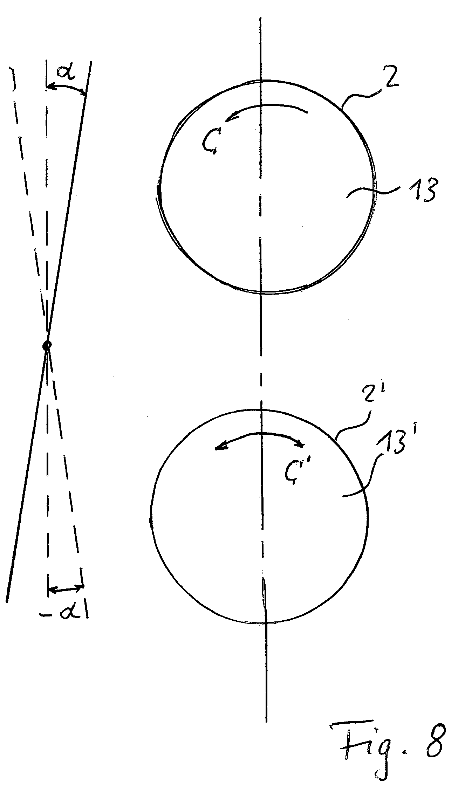

Die Fig. 8 zeigt eine perspektivische Seitenansicht auf die Stirnflächen 13, 13' zweier Trennflächen, die als Trommeln 2, 2' ausgebildet sind. Bei dieser Anordnung der Trennflächen ist die Horizotalverschiebung (a) praktisch Null und die Vertikalverschiebung (b) nimmt eine vorbestimmte Größe an, die je nach Art des Schüttgutes 3 auszuwählen ist. Das Schüttgut, das in dieser Darstellung auf die obere Trommel 2 fällt, wird entsprechend dem oben beschriebenen Trennvorgang vorsortiert, so dass gewisse schwerere Teile nach kurzer Zeit der Berührung mit der Trennfläche 2 von dieser wegfliegen und durch ein Leitelement 14 Eine andere Richtung erfahren. Der Winkel +/- α ist schüttgutabhängig und entsprechend dem Schüttgut 3 anzupassen. Die Drehrichtung C' ist ebenfalls den spezifischen Umständen des Schüttgutes anzupassen.

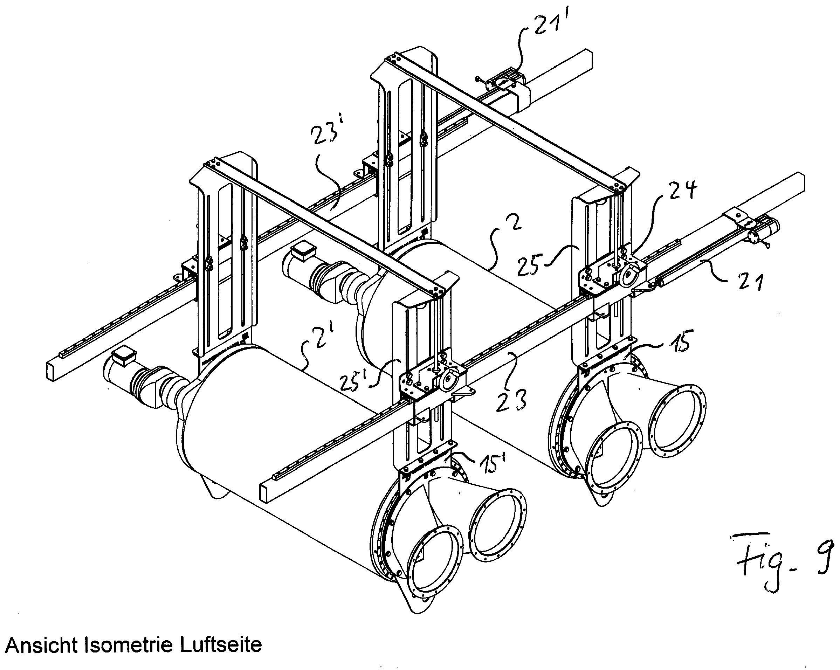

Die Fig. 9 zeigt eine perspektivische Darstellung zweier nebeneinander angeordneter Trommeln 2, 2', die mit jeweils zwei Flanschen 15, 15' an einer Verschiebekonstruktion lösbar befestigt sind. Mit der Verschiebekonstruktion können die beiden Trommeln 2, 2' sowohl in horizontaler (a) als auch in vertikaler (b) Richtung mittels einer nicht näher zu beschreibenden Mechanik verschoben werden. Die Einstellung der Positionen der Trommeln zueinander ist zur Erzielung eines höheren Trenngrades erforderlich, da schwerere Teile schneller nach unten fallen als leichtere Teile. Die Verschiebekonstruktion ist mit hydraulischen oder pneumatischen Stellgliedern 21, 21' ausgerüstet, die die horizontale Verschiebung a der Trommeln entlang der Führungsschienen 23, 23' bewirken. Im vorliegenden Ausführungsbeispiel sind für die vertikale Verschiebung b elektrische Stellglieder 24, 24 , vorgesehen, die die Trommeln entlang der Führungsschienen 25, 25' versetzen.

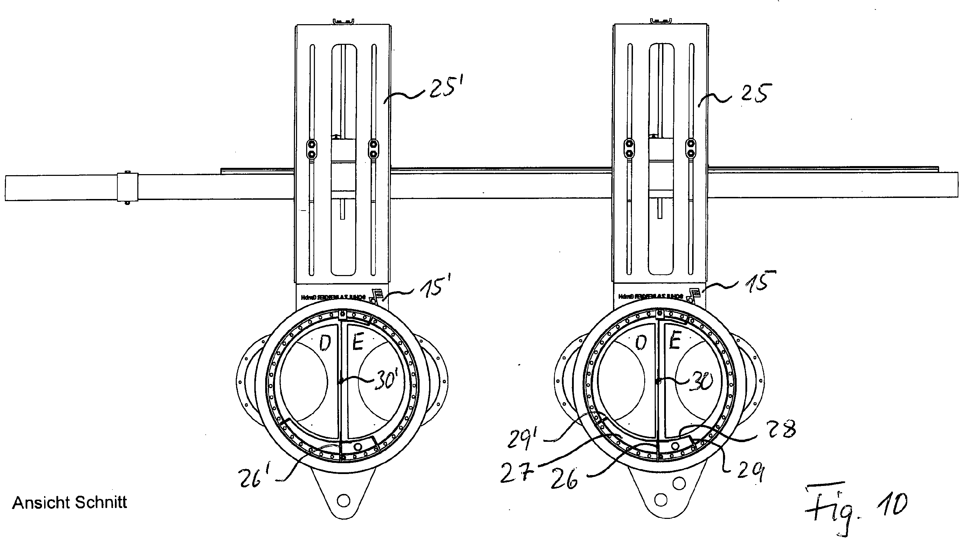

Die Fig. 10 zeigt eine schematische Seitenansicht auf die Stirnseiten der Trommeln 2, 2', die an Flansche 15, 15' an dem Teil der Vertikalverschiebung 25, 25' befestigt sind. Das Innenvolumen jeder Trommel 2, 2' ist durch eine vertikale Trennwand 20, 20' in zwei Teilvolumina D und E unterteilt. Im Bereich der Enden 26, 26' der Trennwände 20, 20' sind etwa quer zur Fläche der Trennwände Bleche 27, 28 angeordnet, die am Ende eine Dichtung 29 aufweisen, mit denen die Unterdruck- und Überdruckkammern abgedichtet werden. Die Dichtungen 29, 29' berühren die Innenwände der Trommeln 2, 2' wodurch eine vollkommene Abdichtung zum atmosphärischen Außenraum bewirkt wird. Die Bleche 27, 28 können wahlweise nach verschoben werden, um die Teilvolumina D, E zu variieren.

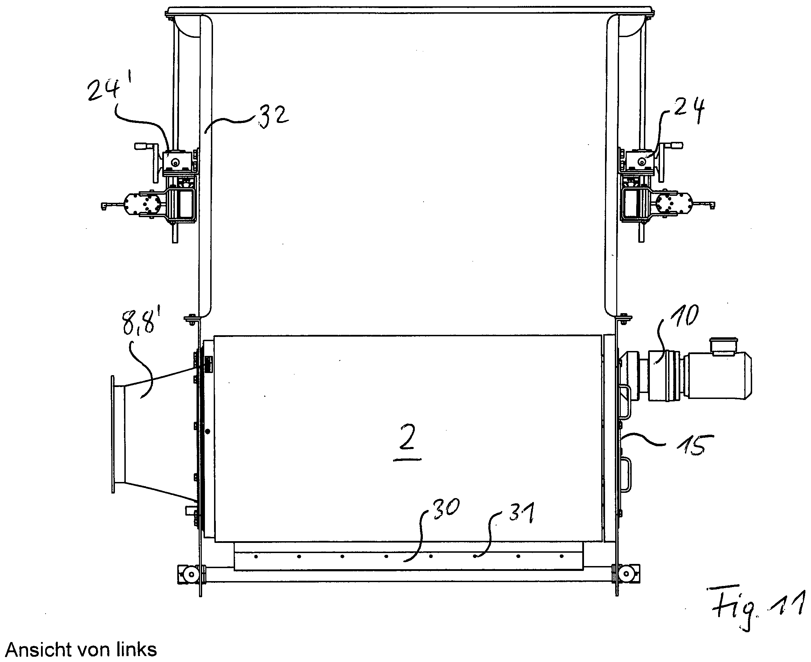

Die Fig. 11 zeigt eine schematische Seitenansicht auf die Trennfläche (2) einer Trommel, die an der Verschiebungskonstruktion befestigt ist. Auf der linken Seite ist der Anschlussstutzen 8, 8' für die Luftzufuhr bzw. Luftabfuhr angeordnet. Auf der rechten Seite in dieser Darstellung, ist die Antriebseinheit 10 am Flansch 15 der Stirnseite 13 befestigt. Ferner ist der Flansch 15 mit der Verschiebekonstruktion lösbar verbunden, die die Trennfläche 2 in horizontaler und vertikaler Richtung mittels zweier Stellglieder 24, 24' versetzt. In diesem Ausführungsbeispiel der Erfindung ist im unteren Bereich der Trommel 2 eine pneumatische Einrichtung 30 angeordnet, die bei Bedarf an der Oberfläche oder in den Durchbrüchen A, A', A" hängen gebliebene Teile durch eine gezielte Luftströmung durch Düsen 31 oder Strömungsschlitze ablöst. In einem anderen Ausführungsbeispiel wird die Trennfläche 2 mechanisch durch Stößel, die in die Durchbrüche der Trennfläche eingreifen, abgelöst. Die mechanische/pneumatische Reinigungseinheit 30, 30' kann sowohl außen als auch im Innern der Trommel angeordnet werden.

Die Erfindung hat verhältnismäßig viele Einstell- und Ausführungsmöglichkeiten zur Verbesserung und Anpassung des Trenngrades der Feststoffe. Die Änderung der Umfangsgeschwindigkeit sowie der Saug- und Blaswirkung in der Trommel kann jederzeit ohne erheblichen Aufwand eingestellt bzw. geändert werden. Der Durchmesser und die Position der Trommel sowie die Öffnungs- bzw. Lochgröße ändern das Trennergebnis deutlich und wird an die jeweils zugeführten Feststoff Massenströme in Art und Menge angepasst.

## Patentansprüche

1. Vorrichtung (1), geeignet zum Trennen von flächigen und körperförmigen Feststoffen, sowie leichten, mittleren und schweren Feststoffen in einem Schüttgut, bestehend aus mindestens zwei Trennflächen (2, 2') die als Trommeln mit Durchbrüchen (A, A', A") in den Mantelflächen ausgebildet sind, die in einem vorbestimmten horizontalen und vertikalen Abstand (a, b) zueinander angeordnet sind, so dass die körperförmigen Bestandteile des Schüttgutes die Tennflächen zeitlich nacheinander berühren, wobei
- die mindestens zwei drehbar gelagerten Trommel-Trennflächen (2, 2') an mindestens einer Stirnfläche (9, 9') geschlossen sind; **dadurch gekennzeichnet, dass**
- an der mindestens einen Stirnfläche mindestens eine Abluft- und/oder Zuluftöffnung (7, 8) angeordnet ist; und
- dass mindestens eine Trennwand (20, 20') das Innenvolumen jeder Trommel in die Teilvolumina D, E unterteilt, wobei die Teilvolumina D und E der Trommel durch die Bleche (27, 28) variiert sind; wobei
- die mindestens eine Trennwand mindestens ein langgestrecktes Blech (27, 28) aufweist, das verschieblich quer zur Trennwand (20, 20') angeordnet ist.

2. Vorrichtung nach Anspruch 1, **dadurch gekennzeichnet, dass** die mindestens zwei als Trommeln ausgebildeten Trennflächen (2, 2') an den Trommelenden mit einer Ortsverschiebungskonstruktion (21 - 25) verbunden sind, wobei die Ortsverschiebungskonstruktion die Trommeln (2, 2') in horizontaler (a) und vertikaler (b) Richtung verschiebt.

3. Vorrichtung nach Anspruch 1, **dadurch gekennzeichnet, dass** der Querschnitt quer zur Längsachse der Trommel (2, 2') rundlich, polygonförmig, vorzugsweise rund ist.

4. Vorrichtung nach einem der vorangegangenen Ansprüche, **dadurch gekennzeichnet, dass** die Lagerung (17) der Trommeln (2, 2') ringförmig im Bereich der Peripherie des Trommelumfang angeordnet ist.

5. Vorrichtung nach Anspruch 1, **dadurch gekennzeichnet, dass** die mindestens eine Trennwand (20, 20') an den Randbereichen zum Trommelmantel Dichtungen (22, 22') aufweist.

6. Vorrichtung nach Anspruch 1, **dadurch gekennzeichnet, dass** die mindestens eine Trennwand (20) an mindestens einer Zugstange (21), die sich über die gesamte Länge der Trommel (2) erstreckt, befestigt ist.

7. Vorrichtung nach einem der vorangegangenen Ansprüche, **dadurch gekennzeichnet, dass** mindestens eine Stirnfläche (9, 13) der Trommel (2) feststeht und nicht rotiert, wobei die Stirnflächen (9, 13) am Umfang Lagerungen (17, 17') aufweisen, die den Trommelmantel drehbar lagern.

8. Vorrichtung nach einem der vorangegangenen Ansprüche, **dadurch gekennzeichnet, dass** die Trommel (2) an geeigneter Stelle (13) einen Zahnkranz am Mantel aufweist, mit dem die Rotation der Trommel bewirkt wird.

9. Vorrichtung nach einem der vorangegangenen Ansprüche, **dadurch gekennzeichnet, dass** die beiden Trennflächen (2, 2') übereinander angeordnet sind und hinter den Trennflächen ein Leitelement (14) angeordnet ist.

10. Vorrichtung nach einem der vorangegangenen Ansprüche, **dadurch gekennzeichnet, dass** zur Reinigung der Durchbrüche (A, A' A") in den Trennflächen (2, 2') im Bereich der Trennflächen eine mechanisch- und/oder pneumatische Einrichtung (30) angeordnet ist, die die Durchbrüche reinigt.

11. Verfahren, geeignet zum Trennen von flächigen und körperförmigen Feststoffen eines Schüttgutes mit einer Vorrichtung (1) mit mindestens einer ersten Trennfläche (2), die als drehbare Trommel mit Durchbrüchen (A, A', A") in den Mantelflächen, mit variabler Drehgeschwindigkeit ausgebildet wird, von der mindestens eine Stirnfläche (9, 9') geschlossen ist; und der ersten Trennfläche (2) die zu trennenden Feststoffe zugeführt werden; und mindestens eine zweite Trennfläche (2') der ersten Trennfläche (2) nachgeordnet wird, wobei die horizontalen und vertikalen Abstände (a, b) der mindestens zwei Trennflächen (2, 2') in einem vorbestimmten variablen Abstand zueinander angeordnet werden, denen zeitlich nacheinander das zu trennende Schüttgut zugeführt wird; **dadurch gekennzeichnet, dass** an mindestens einer Stirnfläche mindestens eine Abluft- und/oder Zuluftöffnung (7, 8) angeordnet wird, wobei die wirksamen Volumina (D, E) im Innern der Trommeln (2, 2') variiert werden, indem die Aufteilung des Innenraums der Trommel-Trennflächen (2, 2') durch mindestens eine Trennwand (20, 20') gebildet wird; und der mindestens einen Trennwand mindestens ein langgestrecktes Blech (27, 28) quer zur Trennwand (20, 20') verschieblich zugeordnet wird.

12. Verfahren nach Anspruch 11, **dadurch gekennzeichnet, dass** die Abstände (F) zwischen dem Trommelmantel und der Fördereinrichtung (4) variable je nach Art des Schüttgutes gewählt wird.

## Claims

1. A device (1) suitable for separating flat and body shaped solids, as well as light, medium and heavy solids, in a bulk material consisting of at least two separating surfaces (2, 2 ') which are designed as drums with openings (A, A', A") arranged in the lateral surfaces which are arranged at a predetermined horizontal and vertical distance (a, b) from one another so that the body components of the bulk material touch the surface areas successively in time, wherein
the at least two rotatably mounted drum separating surfaces (2, 2 ') being closed on at least one end face (9, 9'), **characterized in that**
- at least one exhaust air outlet and / or air supply opening (7, 8) is arranged on the at least one end face; and
- the at least one partition wall (20, 20 ') divides the inner volume of each drum into the partial volumes D, E, and the partial volumes D and E of the drum being varied by the plates 27, 28; in which
- the at least one partition wall has at least one elongated plate (27, 28) which is arranged displaceably transversely to the partition wall (20, 20').

2. The device according to claim 1, **characterized in that** the at least two separating surfaces (2, 2 ') designed as drums are connected at the drum ends to a locating displacement construction (21-25), the locating displacement construction comprising the drums (2, 2') in the horizontal (a) and vertical (b) directions.

3. The device according to claim 1, **characterized in that** the cross-section is round, polygonal, preferably round, transverse to the longitudinal axis of the drum (2, 2 ').

4. The device as claimed in claim 1, **characterized in that** the bearing (17) of the drums (2, 2 ') is arranged annularly in the region of the periphery of the drum circumference.

5. The device according to claim 1, **characterized in that** the at least one partition wall (20, 20') shows seals (22, 22') at the edge regions relative to the drum jacket.

6. The device as claimed in claim 1, **characterized in that** the at least one partition wall (20) is attached to at least one pull rod (21) which extends over the entire length of the drum (2).

7. The device according to one of the preceding claims, **characterized in that** at least one end face (9, 13) of the drum (2) is fixed and does not rotate; and the end faces (9, 13) having circumferential bearings (17, 17 ') which the drum casing rotatably hold.

8. The device according to one of the preceding claims, **characterized in that** the drum (2) has, at a suitable location (13), a toothed rim on the shell with which the rotation of the drum is effected.

9. The device according to one of the preceding claims, **characterized in that** the two separating surfaces (2, 2') are arranged one above the other and a guide element is arranged behind the separating surfaces.

10. The device according to one of the preceding claims, **characterized in that** a mechanical and / or pneumatic device (30) is arranged in the separating surfaces (2, 2 ') for cleaning the perforations (A, A' A ") which cleans the breakthroughs.

11. A method suitable for separating flat and body shaped solids from a bulk material comprising a device (1) having at least a first separating surface (2) which is designed as a rotatable drum with perforations (A, A', A") in the circumferential surfaces at variable rotational speed from which at least one end face (9, 9 ') is closed; and the solids to be separated are fed to the first separating surface (2); and at least a second separating surface (2 ') is arranged downstream of the first separation surface (2), wherein the horizontal and vertical distances (a, b) of the at least two separating surfaces (2, 2 ') are arranged at a predetermined variable distance to one another, to which the bulk material to be separated is fed in succession, **characterized in that** at least one exhaust air and / or supply air opening (7, 8) is arranged on at least one end face; wherein the effective volumes (D, E) are arranged in the interior of the drums (2, 2 '), and the volumes (D, E) can be varied by dividing the inner space of the drum separating surfaces (2, 2 ') is formed by at least one partition wall (20, 20'); and the at least one partition is displaceably associated with at least one elongate plate (27, 28) arranged transversely with respect to the partition wall (20, 20 ').

12. The method according to claim 11, **characterized in that** the distances (F) between the drum casing and the conveyor device (4) are variable depending on the type of bulk material.

## Revendications

1. Dispositif (1) pour séparer des matières solides plates et en forme de corps, ainsi que de légers, moyens et lourds solides dans un matériau en vrac,
constitué d'au moins en deux surfaces de séparation (2, 2') que des barils avec des ouvertures (A, A', A") sont formées dans les surfaces latérales, de façon que les composants en forme de corps de la matière en vrac à une touche prédéterminée, et la distance horizontale et verticale (a, b) sont disposées à l'autre, dans lequel
au moins deux surfaces de séparation (2, 2') à barils au moins une face d'extrémité (9, 9') est fermés,
**caractérisé en ce que**
- au moins a une face d'extrémité est disposé au moins une évacuation d'air et / ou l'ouverture d'entrée d'air (7, 8); et
- qu'au moins un paroi de séparation (20, 20') est dispose pour divisé le volume interne de chaque barils en sous-volumes D, E, dans lequel lesdits sous-volumes D et E du barils à travers les feuilles (27, 28) varie; dans lequel
- au moins une cloison d'au moins une tôle de forme allongée (27, 28) qui est disposé déplaçable transversalement par rapport à la paroi de séparation (20, 20').

2. Dispositif selon la revendication 1, **caractérisé en ce qu'** au moins les deux surfaces de séparation (2, 2') vers le baril se termine par une structure de décalage spatial (21 - 25) sont reliés, dans lequel la construction du déplacement locale des barils (2, 2') changements dans l'horizontale (a) et la direction verticale (b).

3. Dispositif selon la revendication 1, **caractérisé en ce que** la coupe transversale par rapport à l'axe longitudinal du baril (2, 2') arrondie, polygonale, de préférence est ronde.

4. Dispositif selon l'une quelconque des revendications précédentes, **caractérisé en ce que** le palier (17) des barils (2, 2') est disposé de façon annulaire dans la périphérie de la circonférence du baril.

5. Dispositif selon la revendication 1, caractérisé qu'au moins une cloison (20, 20') au niveau des régions de bord pour les joints d'étanchéité de carter de baril (22, 22').

6. Dispositif selon la revendication 1, caractérisé qu'au moins une cloison (20) sur au moins une barre d'accouplement (21) qui se prolonge sur toute la longueur du baril (2) est fixé.

7. Dispositif selon l'une quelconque des revendications précédentes, **caractérisé en ce qu'** au moins une face d'extrémité (9, 13) du baril (2) est fixe et ne tourne pas, de sorte que les faces frontales (9, 13) à la périphérie des dispositifs de palier (17, 17'), la stocker la gaine du baril rotatif.

8. Dispositif selon l'une quelconque des revendications précédentes, **caractérisé en ce que** le baril (2) à un endroit approprié (13) comporte une couronne dentée sur le boîtier, avec la rotation du baril est effectuée.

9. Dispositif selon l'une quelconque des revendications précédentes, **caractérisé en ce que** les deux surfaces de séparation (2, 2') disposé au-dessus les uns des autres et derrière les surfaces de séparation est disposé un élément de guidage (14).

10. Dispositif selon l'une quelconque des revendications précédentes, **caractérisé en ce que** pour le nettoyage des percées (A, A', A") dans les surfaces de séparation (2, 2') dans la zone de la séparation des surfaces est dispose un moyen mécanique et / ou pneumatique (30) pour nettoyer les percées.

11. Procédé, adapté pour séparer des matières solides en forme de feuille et en forme du corps d'un matériau en vrac avec un dispositif (1) comprenant au moins une première surface de séparation (2) sous la forme d'un baril rotatif avec des percées (A, A', A") dans les surfaces latérales avec une vitesse de rotation variable est au moins une face d'extrémité (9, 9') fermée; et une première surface de séparation (2) qui est alimentés à séparer les solides; et au moins une deuxième surface de séparation (2') qui est disposé en aval de la première surface de séparation (2), dans lequel les distances horizontales et verticales (a, b) d'au moins deux surfaces de séparation (2, 2') disposés à une distance variable prédéterminée les uns aux autres, où de temps comme matériau en vrac séparé est placé est successivement amenée, **caractérisé en ce qu'**au moins une face d'extrémité au moins une évacuation d'air et / ou l'ouverture d'entrée d'air (7, 8), dans lequel les volumes efficaces (D, E) à l'intérieur des tambours (2, 2') faire varier par la division de l'espace interne des surfaces de séparation (2, 2') du baril par au moins une cloison (20, 20'); et l'au moins une cloison (20, 20') d'au moins une tôle métallique de forme allongée (27, 28) transversalement par rapport à la paroi de séparation (20, 20') est associé à coulissement.

12. Procédé selon la revendication 11, **caractérisé en ce que** la distance (F) entre l'enveloppe du tambour et le convoyeur (4) variable choisie en fonction de la nature de la matière en vrac.
